# EUROPÄISCHE PATENTANMELDUNG

(11) **EP 4 485 585 A1**
(43) Veröffentlichungstag der Anmeldung: **01.01.2025**
(21) Anmeldenummer: 23182130.7
(22) Anmeldetag: 28.06.2023
(51) Int. Cl.: H01M 4/88, H01M 8/1004, H01M 8/10

(54) **HERSTELLUNGSVERFAHREN EINER MEMBRAN-ELEKTRODEN-EINHEIT UNTER VERWENDUNG EINER ADHÄSIVFOLIE ZUR FORMSTABILISIERUNG DER POLYMERMEMBRAN**

(71) Anmelder: ionysis GmbH, 79110 Freiburg (DE)
(72) Erfinder: Lombeck, Florian, 79110 Freiburg (DE); Edelmann, Jochen, 74889 Sinsheim (DE)
(74) Vertreter: Hertin und Partner Rechts- und Patentanwälte PartG mbB

(57) **Zusammenfassung**

Die Erfindung betrifft ein Verfahren zur Herstellung einer Membran-Elektroden-Einheit für eine Brennstoffzelle und/oder Elektrolysezelle.

Dabei wird eine Polymermembran (1) auf Basis von Kohlenwasserstoff-Ionomeren bereitgestellt, welche eine Vorderseite und Rückseite umfasst. Auf der Rückseite der Polymermembran liegt eine Trägerfolie (5) vor und auf der Vorderseite ist eine erste Katalysatorschicht angebracht. Die Trägerfolie wird entfernt, so dass die Rückseite der Polymermembran frei zugänglich ist. Eine Adhäsivfolie (7) wird auf die erste Katalysatorschicht (3) aufgebracht, so dass eine Stabilisierung für die Beschichtung der Rückseite mit einer zweiten Katalysatorschicht (9) ermöglicht wird.

Des Weiteren betrifft die Erfindung eine Membran-Elektroden-Einheit, welche durch das erfindungsgemäße Verfahren herstellbar ist.

## Beschreibung

Die Erfindung betrifft ein Verfahren zur Herstellung einer Membran-Elektroden-Einheit für eine Brennstoffzelle und/oder Elektrolysezelle.

Dabei wird eine Polymermembran auf Basis von Kohlenwasserstoff-Ionomeren bereitgestellt, welche eine Vorderseite und Rückseite umfasst. Auf der Rückseite der Polymermembran liegt eine Trägerfolie vor und auf der Vorderseite ist eine erste Katalysatorschicht angebracht. Die Trägerfolie wird entfernt, sodass die Rückseite der Polymermembran frei zugänglich ist. Eine Adhäsivfolie wird auf die erste Katalysatorschicht aufgebracht, sodass eine Stabilisierung für die Beschichtung der Rückseite mit einer zweiten Katalysatorschicht ermöglicht wird.

Des Weiteren betrifft die Erfindung eine Membran-Elektroden-Einheit, welche durch das erfindungsgemäße Verfahren herstellbar ist.

### Hintergrund und Stand der Technik

In den membranbasierten Wasserstofftechnologien, H₂-Brennstoffzellen und/oder in der Wasserelektrolyse, werden sogenannte CCMs (catalyst-coated membranes), auch bekannt als Membran-Elektroden-Einheiten (MEA, englisch: membrane electrode assembly), als eine zentrale Komponente verwendet. Auch in anderen Technologien, wie z. B. in Power-to-X-Anwendungen, finden diese Einsatzmöglichkeiten. Eine CCM bzw. MEA ist eine beidseitig mit Elektroden beschichtete Membran. Hierbei separiert die Membran die Anoden- und die Kathodenseite der CCM bzw. MEA und ist selektiv durchlässig (im Falle von Anionen-Austauschmembranen, AEM, englisch: anion exchange membrane) für nur negativ geladene Anionen oder (im Falle von Protonen-Austauschmembranen, PEM, englisch: proton exchange membrane) für Protonen. In den Elektrodenschichten finden die jeweiligen chemischen Redoxreaktionen statt. Essentiell für einen effizienten Betrieb der Brennstoffzelle und/oder Elektrolysezelle ist ein geringer Widerstand an den jeweiligen Grenzschichten, d. h. eine enge Anbindung der beiden Elektrodenschichten an die Membran.

Aufgrund der hohen Bedeutung der CCM für den Betrieb einer Brennstoffzelle liegen im Stand der Technik auch vielfältige Ansätze vor, um vorteilhafte Prozesstechnologien für deren Herstellung anzubieten. Die Technologien diesbezüglich müssen mehrere Faktoren berücksichtigen, um eine sichere Produktion sowie eine zuverlässige Funktionstauglichkeit gewährleisten zu können. So ist die geringe Schichtdicke der Polymermembran eine relevante Größe, welche eine notwendige Stabilität für den Einsatz in einer Brennstoffzelle oder Elektrolysezelle haben muss. Allerdings ist die Beschichtung einer Polymermembran mit Katalysatorschichten mit einer so geringen Dicke nichttrivial. Durch das Auftragen der Katalysatorschicht kann es zu Verformungen und/oder Schwellungen der Membran kommen, was wiederrum nachteilig für den Einsatz in der Brennstoffzelle wäre, da eine inhomogene Ausgestaltung erlangt werden würde. Ferner ist die Katalysatorschicht bei der Beschichtung meist flüssig, wodurch die Haftung der Katalysatorschicht an der Membran erschwert wird.

Ein im Stand der Technik bewährter Herstellungsablauf für eine CCM ist der sogenannte Decal-Prozess. Beim Decal-Prozess wird in der Regel eine Katalysatordispersion auf eine Trägerfolie bzw. Decalfolie (oder auch nur Decal) beschichtet und getrocknet. Hierdurch liegt eine Anodenelektrode bzw. ACD (englisch: anode coated decal) und eine Kathodenelektrode vor. Über einen Verpressungsvorgang, bspw. durch Laminieren, wird ein Verbund umfassend eine Polymermembran und eine Kathode auf die Anodenelektrode aufgebracht. Nach der Verpressung wird die Decal-Folie entfernt. Nach der Entfernung der Decal-Folie liegt eine die beidseitig mit Katalysator- bzw. Elektrodenmaterial beschichtete Polymermembran bzw. CCM vor.

Im Stand der Technik sind sowohl verschiedene Varianten eines grundlegenden Decal-Prozesses als auch alternative Ansätze, beispielsweise mittels einer Direkt-Beschichtung von Katalysatormaterial auf Polymermembranen bekannt, um katalysatorbeschichtete Membranen herstellen zu können.

In der EP 3529845 B1 wird ein Verfahren zur Bereitstellung einer katalysatorbeschichteten Membran für eine Brennstoffzelle mittels einer Direktbeschichtung in einem Rolle-zu-Rolle-Prozess offenbart. Dabei wird eine erste Seite wird mit einer Katalysatorschicht beschichtet, während eine Trägerfolie die Membran stützt. Nach der Entfernung der Trägerfolie wird die Polymermembran durch einen Vakuumförderer transportiert, um mögliche Schwellungen durch die Beschichtung einer weiteren Katalysatorschicht zu verhindern oder zu minimieren.

US 2002/0064593 A1 beschreibt ein Verfahren zur Herstellung einer Membran-Elektroden-Einheit, bei dem ebenfalls eine direkte Beschichtung der Membran mit den Katalysatorschichten erfolgt. Während des Vorganges werden die gegenüberliegenden Seite der Membran stets gestützt. Bei der Beschichtung der Polymermembran mit einer ersten Katalysatorschicht liegt auf der gegenüberliegenden Seite ein Stützfilm vor. Auf die (noch) feuchte erste Katalysatorschicht wird im Anschluss ein Gasverteilungsschicht als Bahn aufgebracht. Anschließend wird der Stützfilm entfernt und die zweite Seite der Membran kann mit einem Katalysatormaterial beschichtet werden, während die Gasverteilungsschicht als Stützstruktur ein Schwellen verhindern soll.

US 2022/0069325 A1 betrifft ein Verfahren zur Herstellung einer Polymermembran, welche mit einer Katalysatorschicht beschichtet wird. Während der Beschichtung einer ersten Seite der Polymermembran mit der Katalysatorschicht dient ein Basismaterial als Stütze. Für die Beschichtung der zweiten Seite soll die erste Elektroden bzw. Katalysatorschicht selbst als Stützmaterial dienen, und umfasst zu diesem Zweck ein Bindermaterial.

In der US 10,118,374 B2 wird gelehrt, ein Rolle-zu-Rolle Verfahren zur beidseitigen Beschichtung einer Polymermembran mit einer Katalysatorschicht einzusetzen. Auf die Vorderseite der Polymermembran wird eine Katalysatorschicht beschichtet, während an der Rückseite eine erste Schutzschicht vorliegt. Nach der Trocknung des Katalysatorschicht erfolgt die Anbringung einer zweiten Schutzschicht. Daraufhin wird die erste Schutzschicht entfernt, um die freigelegte Rückseite der Polymermembran mit einer zweiten Katalysatorschicht zu beschichten.

EP 2654112 B1 offenbart ein Verfahren zur beidseitigen Beschichtung einer Polymermembran mit einer Katalysatorschicht bzw. Katalysatortinte. Bzgl. der Problematik betreffend einer möglichen Schwellung der Polymermembran bei einer Beschichtung mit einer Katalysatortinte wird dargelegt, die Polymermembran mit einem formerhaltenden Film bereitzustellen und diesen Verbund durch eine Anlage zu führen. Auf die entsprechend andere Seite erfolgt die Beschichtung der Katalysatortinte. Der formerhaltende Film weist eine längere Breite als die Polymermembran auf. Nach der Trocknung der Katalysatortinte wird ein zweiter formerhaltender Film auf die getrocknete Katalysatorschicht aufgebracht, welche ebenfalls eine größerer Breite als die der Membran aufweist. Daraufhin wird der auf der anderen Seite angebrachte erste formerhaltende Film entfernt und mit einer weiteren Katalysatortinte beschichtet.

EP 1645001 B1 betrifft ebenfalls ein Verfahren zur Herstellung einer beidseitig katalysatorbeschichteten Polymermembran. Dabei liegt eine Polymermembran mit ihrer Rückseite auf einer ersten Stützfolie vor. Die entsprechende Vorderseite wird mit einem Katalysatormaterial beschichtet und getrocknet. Daraufhin wird auf der Vorderseite eine zweite Stützfolie angebracht und die erste Stützfolie von der Rückseite entfernt. Anschließend erfolgt die Beschichtung der Rückseite der Membran.

Während eine direkte Beschichtung einer Polymermembran mittels Katalysatormaterial somit durchaus im Stand der Technik bekannt ist, stellt der Decal-Prozess insbesondere aufgrund der Schwierigkeit einer Stabilisierung der Membran bei der Beschichtung weiterhin einen Standard dar.

Für die Polymermembranen selbst ist es im Stand der Technik derzeit geläufig, Perfluorsulfonsäure (PFSA)-basierte Membranen einzusetzen. Allerdings weisen PFSA-basierte Membranen einige Nachteile auf. Perfluorierte Chemikalien, zu denen auch PFSAs gehören, gelten als besonders bioakkumulativ, da sie resistent gegen thermischen, chemischen und/oder mikrobiologischen Abbau sind. Perfluorierte Chemikalien reichern sich daher entlang der Nahrungskette in Pflanzen und Tieren bis zum Menschen an. Im Gegensatz zu anderen organischen Kontaminanten binden sich organische Fluorverbindungen an Serumproteine. Perfluorierte Säuren sind giftig für die Leber, können kanzerogen sowie reproduktionstoxisch sein und könnten zu Entwicklungsstörungen führen. Im menschlichen Organismus haben sie eine Verweilzeit von bis zu neun Jahren. Aus diesen Gründen sollte die Freisetzung von perfluorierten Chemikalien in die Umwelt weitestgehend verhindert und der Einsatz minimiert werden.

Hinzu kommt, dass es momentan nur sehr wenige Anbieter für PFSA-basierte Polymermembranen gibt. Die derzeitigen Anbieter verbreiten PFSA-basierte Materialien zu hohen Kosten. Das bekannteste PFSA-basierte lonomer ist Nafion (eingetragene Marke der Firma Chemours), was für bis zu 1 000 EUR pro Kilogramm verkauft wird. Werden zusätzlich die Kosten für das Katalysatormaterial der Katalysatorschicht berücksichtigt, wie z. B. für Platin, wird deutlich, dass ein erheblicher wirtschaftlicher Nachteil derzeit vorliegt, was sich auch nachteilig für eine massenhafte Anwendung auswirkt.

Darüber hinaus stellen PFSA-basierte Polymermembranen aus technischer Sicht einige Herausforderungen dar. PFSA-basierte Materialien gehen mit aufwendigen Synthesen einher, sodass diese nur kosten- und zeitsensitiv bereitgestellt werden können. Darüber hinaus sind sie nur bei einer sehr begrenzten Betriebstemperatur funktionstauglich (bis etwa 120°C). Weiterhin weisen PFSA-basierte Polymermembranen eine hohe Permeabilität gegenüber Reaktanten, wie z. B. Wasserstoff und/oder Sauerstoff, auf, was zu Ineffizienzen und Ausfällen führen könnte.

Daher liegt im Stand der Technik das Bestreben vor, auf PFSA-basierte Polymermembranen zu verzichten und auf ein alternatives Material zurückzugreifen. Diesbezüglich wird einem großen Potential Kohlenwasserstoff-basierten Polymermembranen zugerechnet, da Kohlenwasserstoff eine bessere Umweltverträglichkeit aufweist, kostengünstiger und auch für den Betrieb innerhalb einer Brennstoffzelle effektiver sein kann.

Allerdings lassen sich die gängigen Verfahren des Standes der Technik zur Aufbringung von Katalysatorschichten auf PFSA-basierte Polymermembranen nicht ohne Weiteres auf Kohlenwasserstoff-basierte Polymermembranen übertragen. Insbesondere ist der bei herkömmlichen CCMs verwandte Decal-Prozess nicht für Kohlenwasserstoff-basierte Polymermembranen geeignet. Während eine PFSA-basierte Polymermembran einen thermischen Übergang i.d.R. zwischen 100°C und 150°C aufweist und es hierdurch ermöglicht wird, dass Elektroden mittels Druck und erhöhter Temperatur auf die Membran laminiert werden können, zeigen Kohlenwasserstoff-basierte Polymermembranen für die Temperaturbereiche kein Fließverhalten auf. Bei einer unmittelbaren Beschichtung der Membranen mit einer Katalysatorschicht können jedoch Schwellungen und/oder Schrumpfungen auftreten. Dieser Effekt, den es zu vermeiden gilt, tritt verstärkt bei Polymermembranen auf, welche auf Kohlenwasserstoff-Ionomeren basieren, da sie in der Regel ein stärkeres Quellverhalten als PFSA-Polymermembranen aufweisen.

Bekannte Verfahren zur direkten Beschichtung von Polymermembranen können aus diesen Gründen nicht ohne Weiteres für die Bereitstellung von Membran-Elektroden-Einheiten mit Polymermembranen auf Basis von Kohlenwasserstoff-Ionomeren adaptiert werden. Wie obig erläutert, unterscheiden sich Polymermembranen auf Basis von Kohlenwasserstoff-Ionomeren nicht nur durch ihr Quellverhalten, sondern ebenfalls in Bezug auf ihre mechanische Stabilität als auch ihr Temperaturverhalten von PFSA-basierte Polymermembranen.

Daher gibt es im Stand der Technik den Bedarf, alternative Herstellungsverfahren bereitzustellen, welche eine zuverlässige und robuste Herstellung von Membran-Elektroden-Einheiten erlauben, bei der eine Polymermembran eingesetzt wird, welche auf Kohlenwasserstoff-Ionomeren basiert.

### Aufgabe der Erfindung

Aufgabe der Erfindung ist es, die Nachteile des Standes der Technik zu beseitigen. Insbesondere ist eine Aufgabe der Erfindung, ein Verfahren zur Herstellung einer Membran-Elektroden-Einheit bereitzustellen, bei welchem die Elektroden- bzw. Katalysatorschichten auf einfache Weise mit hoher Präzision und Effizienz aufgebracht werden können, ohne dass die Polymermembran Verformungen oder Spannungen ausgesetzt ist.

### Zusammenfassung der Erfindung

Die erfindungsgemäße Aufgabe wird gelöst durch die unabhängigen Ansprüche. Vorteilhafte Ausgestaltungen der Erfindung sind in den abhängigen Ansprüchen offenbart.

In einem ersten Aspekt betrifft die Erfindung ein Verfahren zur Herstellung einer Membran-Elektroden-Einheit für eine Brennstoffzelle und/oder eine Elektrolysezelle umfassend folgende Schritte:
a) Bereitstellung einer Polymermembran auf Basis von Kohlenwasserstoff-Ionomeren umfassend eine Vorderseite und eine Rückseite, wobei auf der Rückseite eine Trägerfolie und auf der Vorderseite eine erste Katalysatorschicht vorliegt,
b) Entfernung der Trägerfolie, sodass die Rückseite der Polymermembran frei zugänglich ist,
c) Aufbringung einer Adhäsivfolie auf die vorderseitige, erste Katalysatorschicht,
d) Beschichtung einer zweiten Katalysatorschicht auf die Rückseite der Polymermembran.

Das erfindungsgemäße Verfahren hat sich in mehreren Aspekten als besonders vorteilhaft erwiesen.

Das Verfahren erlaubt insbesondere eine kontinuierliche Produktion von Membran-Elektroden-Einheiten, in dem eine direkte Beschichtung einer zweiten Katalysatorschicht zur Bereitstellung der Polymermembran erfolgt. Vorteilhaft kann mittels der Beschichtung ein stabiler Membran-Elektroden-Verbund insbesondere auch für Membranen auf Basis von Kohlenwasserstofflonomeren erhalten werden, welche, wie eingangs erläutert, nicht für einen Decal-Transferprozess geeignet sind. Mittels der Bereitstellung der Adhäsivfolie werden etwaige Nachteile, welche bei dem Beschichtungsprozess in Bezug auf die Verformungen der Membran auftreten können, wirksam vermieden.

So wird durch die Aufbringung einer Adhäsivfolie auf die vorderseitige erste Katalysatorschicht insbesondere eine hinreichend stabilisierte Wirkung für die Beschichtung einer zweiten Katalysatorschicht auf die Rückseite der Polymermembran erzielt, welche auf Kohlenwasserstofflonomeren basiert. Die Adhäsivfolie fungiert mithin als ein Stabilisator für die Polymermembran, während die Beschichtung der zweiten Katalysatorschicht erfolgt. Die stabilisierende Wirkung ist durch die Adhäsivfolie besonders ausgeprägt, da durch ihre adhäsive Eigenschaft ein hinreichend mechanischer Widerstand geboten wird, während die Beschichtung der zweiten Katalysatorschicht stattfindet, sodass Verformungen, Schwellungen und/oder ein Auf- und/oder Abquellen der Polymermembran verhindert wird. Hierdurch wird vorteilhaft eine homogene, d. h. eine glatte und faltenfreie Membran-Elektroden-Einheit bereitgestellt, wodurch eine zuverlässige Funktionstauglichkeit beim Einsatz in einer Brennstoffzelle und/oder Elektrolysezelle gewährleistet wird.

Die im Stand der Technik bekannten Ansätze zur Beschichtung einer weiteren Katalysatorschicht sind für sich genommen vorteilhaft, allerdings hatten sie den Nachteil, dass durch ein flüssiges Auftragen der Katalysatorschicht Verformungen an der Polymermembran resultierten, beispielsweise durch Auf- und/oder Abquellungen. Im Falle von Polymermembranen, welche auf Kohlenwasserstoff-Ionomeren basieren, ist dieser nachteilige Effekt besonders ausgeprägt. Der erfindungsgemäße Einsatz einer Adhäsivfolie, welche vor der Auftragung zweiten Katalysatorschicht auf die erste Katalysatorschicht aufgebracht wird, entfaltet damit ihre Vorteile insbesondere bei der Herstellung Membran-Elektroden-Einheiten umfassend eine Polymermembran, welche auf Kohlenwasserstoff-Ionomeren basieren.

Ein weiterer Vorteil des erfindungsgemäßen Verfahrens ist es, dass sich dieses als folienbasiertes Herstellungsverfahren im Rahmen eines Rolle-zu-Rolle-Prozesses im industriellem Maßstab eingesetzt werden kann. Somit lassen sich sowohl kostengünstig als auch massentauglich Membran-Elektroden-Einheiten herstellen, welche in einer Brennstoffzelle und/oder Elektrolysezelle eingesetzt werden können.

Ferner lassen sich die Verfahrensschritte bei dem Rolle-zu-Rolle Prozess im Wesentlichen bei Raumtemperatur ausführen. Vorzugsweise können lediglich bei Trocknungsschritten optional höhere Temperaturen eingesetzt werden, um den Prozess zu beschleunigen. Demzufolge lassen sich die Bedingungen für Verfahrensschritte gut kontrollieren. Ferner zeichnet sich das Verfahren vorteilhafterweise durch eine hohe Prozesseffizienz aus. Beispielsweise lässt das erfindungsgemäße Verfahren durch die kontinuierlich zuführbare Adhäsivfolie und einer fließenden Integration der Beschichtung einen kontinuierlichen Ablauf zu, ohne dass Unterbrechungen oder Pausen die Effektivität des Herstellungsablauf vermindern.

Das erfindungsgemäße Verfahren dient insbesondere der Herstellung einer Membran-Elektroden-Einheit für eine Brennstoffzelle und/oder eine Elektrolysezelle. Wie obig ausgeführt, ist mit einer Membran-Elektroden-Einheit vorzugsweise eine wesentliche Komponente für den Betrieb einer Brennstoffzelle oder eine Elektrolysezelle gemeint. Die Membran-Elektroden-Einheit umfasst die Polymermembran und zwei Katalysatorschichten, welche im erfindungsgemäßen Kontext als erste und zweite Katalysatorschicht bezeichnet werden. Die Polymermembran weist eine Vorderseite und eine Rückseite auf. Die erste Katalysatorschicht ist auf der Vorderseite der Polymermembran aufgebracht und die zweite Katalysatorschicht befindet sich auf der Rückseite der Polymermembran. Der Membran-Elektroden-Einheit wird eine besondere Bedeutung beigemessen, weil sie für mehrere Funktionen während des Betriebes einer Brennstoffzelle und/oder Elektrolysezelle mitverantwortlich ist. So ermöglicht sie die elektrochemischen Teilreaktionen, welche zur Gesamtreaktion des Reaktionsablaufes führen. Ferner müssen sie eine gewisse lonen- und Elektronenleitfähigkeit verfügen, um einen Übergang durch die Membran-Elektroden-Einheit ermöglichen zu können. Ferner erfüllen sie eine Dichtungs- und Isolationsfunktion gegenüber weiteren Komponenten, welche für die Brennstoffzelle und/oder Elektrolysezellen ebenfalls verwandt werden können, beispielsweise Bipolarplatten.

Eine Brennstoffzelle ist dem Fachmann in seinem prinzipiellen Aufbau und seiner prinzipiellen Wirkung bekannt. Eine Brennstoffzelle umfasst vorzugweise eine Anode, eine Kathode und eine Polymermembran. Zwischen den Elektroden befindet sich ein Elektrolyt, der als lonenleiter zwischen Anode und Kathode fungiert. Die Polymermembran liegt zwischen der Anode und Kathode vor. Eine Elektrolysezelle weist einen im Grunde identischen Aufbau wie eine Brennstoffzelle auf, allerdings ist die Umsetzung bzw. Wirkung umgekehrt. Während beispielsweise bei einer Wasserstoff-Elektrolyse in einer Elektrolysezelle Wasser mit Hilfe von elektrischem Strom in Wasserstoff umgewandelt, der dann gespeichert werden kann, wird dieser Prozess bei der Brennstoffzelle umgekehrt und elektrischer Strom erzeugt.

Erfindungsgemäß ist es vorgesehen, dass die Polymermembran auf Kohlenwasserstofflonomeren basiert. Ein lonomer ist im Stand der Technik als Polymer bekannt, welches wiederkehrende Seitenketten aufweist, welche an das Polymergerüst, auch Polymerrückrat genannt, gebunden sind und elektrisch geladene bzw. ionische und elektrisch neutrale funktionelle Gruppen umfassen. Seitenketten, welche ionische funktionelle Gruppen umfassen werden als ionische Seitenketten bezeichnet. Ein lonomer weist vorzugsweise einen Anteil von mindestens 10% an ionische Seitenketten (vorzugsweise in Bezug auf die Gesamtzahl von ionischen und nicht-ionischen Seitenketten) auf, besonders vorzugsweise einen Anteil von mehr als 30% an ionischen Seitenketten.

In einer Ausführungsform weist das lonomer einen Anteil von mindestens 10% (der Seitenketten) ionische Seitenketten auf, also beispielsweise mindestens 10%, 15, 20, 25, 30, 35, 40, 45, 50, 55, 60, 65, 70, 75, 80, 85, 90, 95 oder 100% an ionische Seitenketten. In einer weiteren Ausführungsform weist das lonomer einen Anteil von 30 bis 70% an ionische Seitenketten auf.

Für protonenleitende Polymermembranen können in der Regel lonomere bzw. Polymere mit negativ geladenen ionischen Seitengketten verwendet werden, während anionenleitende Membranen im Allgemeinen lonomere bzw. Polymere mit positiv geladenen ionischen Seitengketten umfassen. Negativ geladene ionische Seitenketten umfassen, ohne auf diese Beispiele beschränkt zu sein, anionische funktionelle Gruppen wie Sulfonat -SO₃⁻X⁺, Phosphoryl - PO₃⁻X⁺₂ und/oder Carboxyl -COO-X⁺-, wobei X ein Proton (H⁺) oder ein anderes Kation, beispielsweise ein Kalium- oder Natrium-Kation ist. Positiv geladene ionische Seitengruppen umfassen ohne auf diese Beispiele beschränkt zu sein kationische funktionelle Gruppen wie Sulfonium -R1 R2R3S⁺Y⁻, Phosphonium -R1R2R3P⁺Y⁻, und/oder ein quartäres Amin - R1R2R3N⁺Y⁻, wobei R1, R2 und R3 Alkyl- oder Aryl ist und Y ein Anion ist, beispielsweise ein Chlorid-, lodid-, Bromid- oder Fluorid-Anion.

Ein lonomer kann weiterhin Seitenketten umfassen, welche nicht-ionische bzw. neutrale funktionelle Gruppen umfassen, wie beispielsweise ohne auf diese Beispiele beschränkt zu sein Alkyl, Halogen, Nitro und/oder Cyano.

Ein Kohlenwasserstoff-Ionomer meint ein lonomer, welches ein Polymerrückgrat hat, das im Wesentlichen Kohlenstoff und Wasserstoff umfasst. Das Polymerrückgrat eines Kohlenwasserstoff-Ionomers kann weiterhin Heteroatome wie beispielsweise Stickstoff, Schwefel, Sauerstoff und/oder Phosphor umfassen. Ein Kohlenwasserstoff-lonomer kann weiterhin einen Linker umfassen, welcher zwischen dem Rückgrat des Kohlenwasserstoff-Ionomers und einer Seitenkette und/oder zwischen den einzelnen Einheiten des Polymerrückrats eine kovalente Verbindung bildet, beispielsweise, ohne auf diese Beispiele beschränkt zu sein, Sulfonyl, Ester, Ether, Amide, sekundäre Amine, tertiäre Amine und/oder Amonium.

Beispiele für ein Polymerrückgrat eines Kohlenwasserstoff-Ionomers umfassen, ohne auf diese Beispiele beschränkt zu sein, Polyarylen wie beispielsweise Polyphenylen, Polysulfon, Polyester, Polyether, Polyketon, Polyimid, Polyamid, Polyimidazol, Polyurethan und Polyalkylen.

In einer Ausführungsform umfasst ein Kohlenwasserstoff-Ionomer bevorzugt ein Polymerrückgrat, welches durch eine Kette umfassend Kohlenstoffatome und Wasserstoffatome gebildet wird. Vorzugsweise umfasst das Polymerrückgrat Arylgruppen wie beispielsweise Phenylgruppen. Vorzugsweise umfasst ein Kohlenwasserstoff-Ionomer eine ionische Seitenkette welche Sulfonat SO₃-X⁺, Phosphoryl PO₃-X⁺₂ und/oder Carboxyl COO-X⁺ umfasst, wobei X ein Proton oder ein anderes Kation, wie beispielsweise ein Kalium- oder ein Natrium-Ion. Bevorzugte Kohlenwasserstoff-Ionomere können der WO 2018/187864 A1 entnommen werden.

Dass die Polymermembran auf Kohlenwasserstoff-Ionomeren basiert, meint insbesondere, dass die Polymermembran mit einem höheren Anteil, von Kohlenwasserstoff-Ionomeren aufweist als weitere optionale chemische Verbindungen, die für den Aufbau der Polymermembran eingesetzt werden könnten. Insbesondere kann die Polymermembran im Wesentlichen Kohlenwasserstofflonomere umfassen, vorzugweise einen Anteil von mehr als 80 Gew.-%, mehr als 90 Gew.-%, mehr als 95 Gew.-%, mehr als 99 Gew.-%.

Die Polymermembran dient insbesondere dem Durchlass von Protonen oder Anionen , während die erste und zweite Katalysatorschicht bei den chemischen Teilreaktionen für die Anode und Kathode mitbeteiligt sind.

Zunächst erfolgt eine Bereitstellung der Polymermembran auf Basis von Kohlenwasserstofflonomeren. Auf der Rückseite der Polymermembran liegt eine Trägerfolie und auf der Vorderseite die erste Katalysatorschicht vor. Im erfindungsgemäßen Kontext ist es bevorzugt vorgesehen, folgende Schichtenfolge zu Beginn des Verfahrens bereitzustellen: Eine Trägerfolie, darauf positioniert die Polymermembran und auf der Vorderseite der Polymermembran die erste Katalysatorschicht, wobei auf der Rückseite der Polymermembran anfänglich dementsprechend die Trägerfolie angebracht ist.

Die Trägerfolie bezeichnet eine Folie, die als Träger und damit auch als Stütze für die Polymermembran und erste Katalysatorschicht fungiert. Die Schichtenfolge umfassend Trägerfolie, Polymermembran und Katalysatorschicht kann bevorzugt als gesamtheitliche Einheit bereitgestellt und für die weiteren Verfahrensschritte verwandt werden. Ebenso kann es bevorzugt sein, eine solche Schichtenfolge im Rahmen des Verfahrens bereitzustellen, in dem auf eine Trägerfolie die Polymermembran und auf die Vorderseite der Polymermembran die erste Katalysatorschicht aufgebracht wird.

Um die Rückseite der Polymermembran freizulegen, wird die Trägerfolie entfernt. Die Rückseite der Polymermembran ist mithin frei zugänglich, d. h. insbesondere frei zugänglich für ein Auftragen mit einer weiteren Schicht, insbesondere der zweiten Katalysatorschicht. Vor der Beschichtung der zweiten Katalysatorschicht wird die Adhäsivfolie auf die erste Katalysatorschicht aufgebracht, um dem Schichtsystem die nötige Stabilität zu verleihen, eine möglichst glatte und faltenfreie beidseitig mit Katalysatorschichten beschichtete Polymermembran zu erhalten. Dabei kann es bevorzugt sein, dass die Adhäsivfolie auf die erste Katalysatorschicht aufgebracht wird, nachdem die Trägerfolie entfernt wurde, d. h., dass Schritt b) vor Schritt c) erfolgt. Es kann auch bevorzugt sein, dass zunächst die Adhäsivfolie auf die erste Katalysatorschicht angebracht wird und daraufhin die Entfernung der Trägerfolie erfolgt, sodass Schritt c) vor Schritt b) stattfinden kann.

Demnach ist durch die Angabe Aufzählung der Schritte a)-d) keine beschränkende Reihenfolge festgelegt. Vielmehr kann das Verfahren auch mit einer abweichenden Reihenfolge der aufgezählten Verfahrensschritte durchgeführt werden. Beispielsweise kann das Verfahren vorzugsweise auch durch folgende Reihenfolge der Verfahrensschritte gekennzeichnet sein:
a) Bereitstellung einer Polymermembran auf Basis von Kohlenwasserstoff-Ionomeren umfassend eine Vorderseite und eine Rückseite, wobei auf der Rückseite einer Trägerfolie und auf der Vorderseite eine erste Katalysatorschicht vorliegt,
b) Aufbringung einer Adhäsivfolie auf die vorderseitige, erste Katalysatorschicht,
c) Entfernung der Trägerfolie, sodass die Rückseite der Polymermembran frei zugänglich ist,
d) Beschichtung einer zweiten Katalysatorschicht auf die Rückseite der Polymermembran.

Nach der Anbringung der Adhäsivfolie auf die vorderseitige erste Katalysatorschicht wird auf der Rückseite der Polymermembran die zweite Katalysatorschicht beschichtet. Durch die Adhäsivfolie werden vorteilhaft Schwellungen und/oder Schrumpfungen vermieden, während die zweite Katalysatorschicht auf die Polymermembran beschichtet wird. Dies wird insbesondere durch die adhäsive Wirkung der Adhäsivfolie gewährleistet, welche durch eine Stabilisierung der Polymermembran unerwünschte Verformungen verhindert.

In einer weiteren bevorzugten Ausführungsform ist das Verfahren dadurch gekennzeichnet, dass die Adhäsivfolie mit einer Klebekraft von 0,1 - 10 cN/mm (Zentinewton pro Millimeter), bevorzugt von 0,5 - 5 cN/mm, besonders bevorzugt von 1 - 3 cN/mm, die Polymermembran kontaktiert.

Die Klebekraft meint bevorzugt die Verbindungskraft zwischen der Adhäsivfolie und der Polymermembran. Im erfindungsgemäßen Kontext wird sie bevorzugt durch Newton pro Millimeter oder Zentinewton pro Millimeter angegeben. Durch die Klebekraft wird vorzugsweise angegeben, wieviel Kraft aufgewendet werden muss, um einen Bereich von 1 mm die Adhäsivfolie von der Polymermembran zu lösen. Im Hinblick auf die Ausgestaltung der im Verfahren einzusetzenden Komponenten, insbesondere in Bezug auf die Dicke der Polymermembran und den aufgebrachten Druck während der Beschichtung der zweiten Katalysatorschicht, haben sich die genannten Wertebereiche für die Klebekraft als vorteilhaft erwiesen, um zuverlässig die Homogenität der Polymermembran beibehalten zu können, ohne dass nachteilige Effekte aufgrund einer zu starken Klebekraft auftreten. Die vorgenannten Werte stellen einen optimalen Bereich dar, welcher einerseits für eine Vielzahl an Polymermembranen zuverlässig Schwellungen und/oder Verformungen verhindert und gleichzeitig eine rückstandslose Entfernung der Adhäsivfolie ermöglicht. Hierdurch wird eine hohe Wiederholbarkeit des Herstellungsverfahren und reproduzierbare hohe Performance der Membran-Elektroden-Einheit in einer Brennstoffzelle und/oder Elektrolysezelle gewährleistet.

Die Klebekraft kann beispielsweise mithilfe eines sogenannten Peeltests gemessen werden. Dabei werden vorzugsweise ein Kraftmessgerät, ein Probenhalter und Mechanismus eingesetzt, durch den die Adhäsivfolie mit einer kontinuierlichen Geschwindigkeit und unter einem bestimmten Winkel abgezogen wird. Die Adhäsivfolie, welche an einem Objekt aufgebracht ist, das wiederrum am Probelhalter befestigt ist, wird durch den Mechanismus abgezogen. Das Kraftmessgerät misst die Kraft, die zur Entfernung der Adhäsivfolie unter Beachtung des Winkels eingesetzt wird. Ein Peeltest kann mit einem entsprechend Peeltest-Gerät durchgeführt werden. Der Peeltest kann beispielsweise gemäß der DIN 55529 und/oder durch einen T-Peeltest ausgeführt werden.

Um die Beibehaltung der Form der Polymermembran durch die adhäsive Wirkung der Adhäsivfolie zu gewährleisten, ist es bevorzugt, dass die Adhäsivfolie einen Abschnitt und/oder eine Komponente umfasst, die die Haftung als solche ermöglicht.

In einer bevorzugten Ausführungsform ist das Verfahren dadurch gekennzeichnet, dass die Adhäsivfolie einen mehrschichtigen Aufbau aufweist und ein Substrat sowie eine Adhäsivschicht umfasst, wobei bei der Aufbringung der Adhäsivfolie deren Adhäsivschicht mit der ersten Katalysatorschicht kontaktiert wird.

Die Ahäsivschicht bezeichnet bevorzugt einen Bereich der Adhäsivfolie, durch den insbesondere die Haftung zwischen der Adhäsivfolie und der Polymermembran ermöglicht wird. Dementsprechend kann die Adhäsivschicht als eine Klebeschicht oder klebefähige Schicht der Adhäsivfolie aufgefasst werden. Im Verfahren ist es die Adhäsivschicht, welche mit der Polymermembran kontaktiert wird, wenn die Adhäsivfolie auf die vorderseitige, erste Katalysatorschicht aufgebracht wird.

Das Substrat bezeichnet einen Bestandteil der Adhäsivfolie, welche als Träger der Adhäsivschicht fungiert und insbesondere für die mechanische Stabilität der Adhäsivfolie verantwortlich ist. Durch das Substrat erlangt die Adhäsivfolie die Stabilität, um bei der Beschichtung der zweiten Katalysatorschicht den mechanischen Widerstand zu bieten, um Schwellungen und/oder Schrumpfungen durch die Membran zu vermeiden oder in erheblichen Maßen zu reduzieren.

In bevorzugten Ausführungsformen wird das Substrat der Trägerfolie von einem Material gebildet, dessen Elastizitätsmodul (E-Modul) von 1000 N/mm² bis 10 000 N/mm², vorzugsweise von 2000 N/mm² bis 8 000 N/mm², besonders bevorzugt von 3000 N/mm² bis 6000 N/mm² beträgt.

Vorzugsweise weist die Adhäsivfolie eine Festigkeit, vorzugsweise eine Zugfestigkeit in Längs- und/oder Querrichtung, zwischen 10 - 1400 N/mm², bevorzugt zwischen 20 - 500 N/mm², besonders bevorzugt 50 - 300 N/mm² auf.

Die genannten bevorzugten Bereiche für die Festigkeit der Adhäsivfolie haben sich dahingehend als vorteilhaft erwiesen, um eine hinreichende Stabilität zu gewährleisten, um möglichen Verformungen, wie z. B. Auf- und/oder Abquellungen der Polymermembran, bei der Beschichtung der zweiten Katalysatorschicht entgegenwirken zu können. Gleichzeitig sind die genannten bevorzugten Wertebereiche für die Festigkeit dahingehend vorteilhaft, dass die Adhäsivfolie eine ausreichende Flexibilität aufweist, um insbesondere in einem Rolle-zu-Rolle Prozess eingesetzt werden zu können. Die bevorzugten Festigkeitswerte können insbesondere durch eine Materialwahl und Dicke des Substrats bestimmt werden, auf dem die bevorzugte Adhäsivschicht aufgebracht ist.

Vorzugsweise sind die Adhäsivschicht und das Substrat im Wesentlichen deckungsgleich ausgestaltet, sodass die Oberfläche der Adhäsivschicht die Oberfläche des Substrates im Wesentlichen überdeckt. Daher ist es bevorzugt, dass hinsichtlich der Länge und/oder Breite die Adhäsivschicht und das Substrat im Wesentlichen miteinander übereinstimmen. Durch die Ausgestaltung der Adhäsivschicht und des Substrates kann somit auch die Ausgestaltung der Adhäsivfolie vorbestimmt werden. Dies kann beispielsweise der Optimierung der Klebefähigkeit an der Polymermembran und/oder Materialeinsparung dienen.

Ebenfalls kann es bevorzugt sein, dass ein Teilbereich des Substrates mit der Adhäsivschicht beschichtet ist. Beispielsweise kann es bevorzugt sein, nur einen Randbereich des Substrates mit der Adhäsivschicht zu beschichten, sodass ein mittiger Bereich des Substrates frei von der Adhäsivschicht ist. Insbesondere kann die Adhäsivschicht eine Oberfläche des Substrates umranden, sodass keine flächige Anbringung der Adhäsivschicht auf dem Substrat vorliegt.

In bevorzugten Ausführungsformen weist die Adhäsivfolie eine oder mehrere Perforationen auf. Dies kann vorzugsweise durch die Anbringung von eine oder mehrere Perforationen an der Adhäsivschicht und/oder dem Substrat vorgegeben werden.

Vorzugsweise können die eine oder mehreren Perforationen halbkreisförmig, kreisförmig, ellipsenförmig, dreieckig, viereckig, fünfeckig, sechseckig und/oder mehreckig ausgestaltet sein. Die Perforationen können unterschiedliche Größen aufweisen, beispielsweise kann es bevorzugt sein, dass die eine oder mehreren Perforationen Ausmaße zwischen 0,1 - 1000 µm, bevorzugt zwischen 1 - 500 µm, besonders bevorzugt zwischen 10 - 200 µm aufweisen.

Durch die Anbringung von Perforationen kann der erzielte mechanische Widerstand gegenüber der Beschichtung der zweiten Katalysatorschicht optimiert werden. Insbesondere kann die Adhäsivfolie eine höhere Flexibilität durch die Perforationen erlangen, sodass beispielsweise mit einem höheren Druck die Beschichtung der zweiten Katalysatorschicht erfolgen kann und gleichzeitig eine hinsichtlich der Geometrie homogene Ausgestaltung der Polymermembran gewährleistet wird. Ferner kann im Rahmen eines Rolle-zu-Rolle Prozesses eine schnellere Zuführung eingestellt werden, ohne das Risiko eines Risses zu erhöhen.

In einer weiteren bevorzugten Ausführungsform ist das Verfahren dadurch gekennzeichnet, dass eine Klebekraft zwischen der Adhäsivschicht und dem Substrat vorliegt, die größer als die Klebekraft zwischen der Adhäsivschicht und der Polymermembran. Bevorzugt ist die Klebekraft zwischen der Adhäsivschicht und dem Substrat um einen Faktor 1,5, 2, 3, 4, 5, 6, 7, 8, 9, 10 oder mehr größer als die Klebekraft zwischen der Adhäsivschicht und der Polymermembran. Durch die größere Klebekraft, welche vorzugsweise zwischen der Adhäsivschicht und dem Substrat vorliegt, wird vorteilhaft die Beibehaltung der strukturellen Ausgestaltung der Adhäsivfolie gewährleistet, während zuverlässig die Adhäsivfolie von der zweiten Katalysatorschicht entfernt werden kann, um in der Anwendung in einer Brennstoff- und/oder Elektrolysezelle eingesetzt werden zu können.

In einer weiteren bevorzugten Ausführungsform ist das Verfahren dadurch gekennzeichnet, dass das Substrat ausgewählt ist aus einer Gruppe Polyester, vorzugsweise Polyethylenterephthalat (PET), Polyethylennaphthalat (PEN), Polyethylen, Polypropylen, Polyvinylchlorid (PVC), Polyimid, Polyvinylchlorid. Ebenso kann das Substrat beispielsweise auch durch ein Papier gebildet werden, auf welches die Adhäsivschicht aufgebracht ist.

In einer weiteren bevorzugten Ausführungsform ist das Verfahren dadurch gekennzeichnet, dass die Adhäsivschicht durch ein Klebematerial gebildet wird, ausgewählt aus einer Gruppe umfassend ein Acrylat und/oder Silikon. Auch Haftschmelzkleber, wie z. B, Kautschuk, können bevorzugt zum Einsatz kommen.

Diese bevorzugten Materialien für das Substrat und die Adhäsivschicht erlauben die Stabilitätseigenschaften und/oder Klebefähigkeit der Adhäsivfolie auf einfache Weise zu optimieren, um einerseits eine ausreichende Klebekraft zur Stabilisierung der Membran bereitzustellen und andererseits Rückstände beim Ablösen der Adhäsivfolie zu vermeiden. Insbesondere eignen sich die genannten Materialien für eine im Wesentlichen homogene Verteilung der Klebekraft an der Polymermembran, sodass während des Herstellungsverfahrens es zu keinerlei Verzügen kommt und somit die Form der Polymembran mitsamt der aufgebrachten ersten Katalysatorschicht beibehalten wird.

Die genannten Materialien haben sich zudem dahingehend als zuverlässig erwiesen, dass eine ausreichende starke Klebeverbindung zwischen Adhäsivschicht und Substrat vorliegt, um diese gesamtheitlich als Adhäsivfolie auf die erste Katalysatorschicht an der Polymermembran aufbringen zu können. Die Klebekraft zwischen Adhäsivschicht und Substrat ist dabei vorzugsweise ausreichend hoch, um sowohl ein Ablösen von der Adhäsivschicht vom Substrat beim Entfernen der Adhäsivfolie von ersten Katalysatorschicht zu verhindern als auch etwaigen Scherkräften standzuhalten, welche bei der Führung über Walzen und/oder Rollen, insbesondere in einem Rolle-zu-Rolle Prozess, auftreten können. Die erhaltene Adhäsivfolie lässt sich somit zuverlässig in einem Rolle-zu-Rolle Prozess einsetzen und eignet sich für eine kostengünstige Massenherstellung im industriellen Maßstab.

Ferner bieten die vorgenannten Materialien vielfältige Vorteile aufgrund standardisierter Prozesse, um Bearbeitungen der Adhäsivfolie vorzunehmen, beispielsweise die Anbringung von Perforationen und/oder die Änderung von Dickenwerte der Adhäsivschicht und/oder des Substrates.

In einer bevorzugten Ausführungsform ist das Verfahren dadurch gekennzeichnet, dass die Adhäsivfolie eine Dicke von 10 µm - 1 mm, bevorzugt von 20 µm - 500 µm, weiterhin bevorzugt von 50 µm - 500 µm, besonders bevorzugt von 40 µm - 200 µm, ganz besonders bevorzugt von 100 µm - 200µm. Bevorzugte Dicken der Adhäsivfolien liegen in dem vorgenannten Bereich, wobei auch Zwischenbereiche bevorzugt seien können wie beispielsweise 10 - 100 µm, 100 - 200 µm, 200 - 300 µm, 300 - 400 µm, 400 - 500 µm, 500 - 600 µm, 600 - 700 µm, 700 - 800 µm, 800 - 900 µm oder 900 - 1000 µm bzw. 1 mm. Ein Fachmann erkennt, dass auch andere der vorgenannten bevorzugten Bereichsgrenzen auch kombiniert werden können, um weitere bevorzugt Bereich zu erhalten, wie beispielsweise 100 µm bis 500 µm, 400 µm bis 1000 µm oder auch 200 µm bis 600 µm.

Die genannten Dickenwerte für die Adhäsivfolie begünstigen einerseits einen mechanischen Widerstand zur Stabilisation der Polymermembran, während die zweite Katalysatorschicht auf die Polymermembran aufgebracht wird. Andererseits sind die Dicken nicht zu hoch, als dass diese eine Prozessierung in einem Rolle-zu-Rolle Prozess erschweren würden. Die bevorzugten Spannen stellen somit einen optimalen Bereich dar, um eine Elektroden-Membran-Einheit zuverlässig und verformungsfrei in einem Rolle-zu-Rolle Prozess herzustellen.

Der Durchschnittsfachmann erkennt, dass in der bevorzugten Ausführungsform, in der die Adhäsivfolie ein Substrat und eine Adhäsivschicht umfasst, die Summe derer einzelnen Dicken die gesamte Dicke der Adhäsivfolie ergibt.

In einer bevorzugten Ausführungsform kann die Dicke des Substrats beispielsweise von 5 µm-900 µm betragen, bevorzugt von 15 µm - 400 µm, besonders bevorzugt zwischen 30 - 150 µm betragen, während die die Adhäsivschicht beispielsweise eine Dicke von 1 µm - 100 µm, bevorzugt zwischen 5-50 µm, besonders bevorzugt zwischen 10 - 30 µm aufweisen kann.

In einer weiteren bevorzugten Ausführungsform ist das Verfahren dadurch gekennzeichnet, dass die Adhäsivfolie nach einer Beschichtung der zweiten Katalysatorschicht entfernt und/oder für ein Recycling auf einer Aufwicklungsrolle aufgewickelt wird.

Durch die Entfernung der Adhäsivfolie wird die erste Katalysatorschicht freigelegt, sodass die Membran-Elektroden-Einheit in eine Brennstoffzelle und/oder Elektrolysezelle integriert werden kann, auf der sie zuvor aufgebracht wurde. Für den Betrieb in einer Brennstoffzelle und/oder Elektrolysezelle ist es wichtig, dass die Adhäsivfolie nicht mehr angebracht ist für die entsprechende Teilreaktion der Gesamtreaktion. Die Entfernung der Adhäsivfolie kann dabei bevorzugt unmittelbar vor einer Integration in eine Brennstoffzelle und/oder Elektrolysezelle entfernt werden.

Beispielsweise kann es bevorzugt sein, die hergestellte Membran-Elektroden-Einheit noch mit der schützenden Adhäsivfolie an den Ort der Integration in eine Brennstoffzelle und/oder Elektrolysezelle zu transportieren. Vorteilhaft stellt die Membran-Elektroden-Einheit zusammen mit der Adhäsivfolie bereits ein transportfähiges Einzelprodukt dar, welches ohne Qualitätsverlust zum Ort der Integration in einer Brennstoffzelle und/oder Elektrolysezelle gebracht werden kann.

In bevorzugten Ausführungsformen kann die Adhäsivfolie auch entfernt und gegen eine weitere Trägerfolie ausgetauscht werden. Die Membran-Elektroden-Einheit kann mitsamt der weiteren Trägerfolie an dem Ort der Integration in eine Brennstoffzelle und/oder Elektrolysezelle transportiert werden. Beispielsweise kann die Trägerfolie kostengünstiger gewählt werden als die Adhäsivfolie, wodurch die Wirtschaftlichkeit weiter erhöht werden. Die weitere Trägerfolie entspricht dann vorzugsweise einer Transportfolie und erfüllt eine Schutzfunktion, insbesondere während des Transports. Die Ansprüche in Bezug auf eine Materialauswahl für eine derartige Transport- bzw. Schutzfolie sind geringer als für die Adhäsivfolie deren Klebekraft wie erläutert vorzugsweise auf die Polymermembran abzustimmen ist.

Es kann auch bevorzugt sein, die Membran-Elektroden-Einheit ohne weitere Folie direkt an einem Ort zu befördern, an der die Integration in einer Brennstoffzelle und/oder Elektrolyse ausgeführt werden soll.

Es kann auch bevorzugt sein, dass die Adhäsivfolie auf eine Aufwicklungsrolle aufgewickelt wird, sodass vorteilhaft die aufgewickelte Adhäsivfolie für ein Recycling wiederverwendet werden kann. Dies ist insbesondere dann bevorzugt, wenn die Adhäsivfolie entfernt und/oder ersetzt werden soll, beispielsweise durch eine weitere Trägerfolie bzw. Transportfolie.

Das Aufwickeln der Adhäsivfolie auf der Aufwicklungsrolle kann beispielsweise auch als ein zusätzlicher Schritt des erfindungsgemäßen Verfahrens ausgeführt werden. Dies kann insbesondere nach der Aufbringung der zweiten Katalysatorschicht erfolgen, d. h., nachdem der wesentliche Zweck der Adhäsivfolie erfüllt wurde. Vorzugsweise kann eine entsprechende Wirkverbindung vorliegen, sodass nach der Beschichtung (und/oder einer optionalen Trocknung der zweiten Katalysatorschicht) die Adhäsivfolie zurück auf eine Aufwicklungsrolle gewickelt wird, um in einem kontinuierlichen Verfahren wiedereingesetzt zu werden. Vorteilhafterweise wird hierdurch eine Materialeinsparung für die Adhäsivfolie erzielt, was sich insbesondere im Hinblick auf eine Massenanfertigung als vorteilhaft erweist. Darüber hinaus ist eine Rückführung der Adhäsivfolie auch für das Verfahren als solches vorteilhaft, da ein stetiger Produktionsablauf gewährleistet wird, der im Wesentlichen unterbrechungsfrei ablaufen kann und Faktoren, wie die Wiedereinsetzung von Adhäsivfolie, falls diese ausgegangen sein sollte, unberücksichtigt bleiben können.

In einer weiteren bevorzugten Ausführungsform ist das Verfahren dadurch gekennzeichnet, dass die Adhäsivofolie einen Schutzfilm aufweist, wobei der Schutzfilm vor der Aufbringung der Adhäsivfolie auf die erste Katalysatorschicht entfernt wird.

Der Schutzfilm bezeichnet eine Komponente, die auf der Adhäsivfolie angebracht ist, um ein Verkleben der Adhäsivfolie mit sich selbst oder mit anderen (unerwünschten) Komponenten zu vermeiden. Die Schutzfolie verhindert insbesondere auch ein unerwünschtes Verkleben an einer Aufwicklungsrolle, an welcher die Adhäsivfolie angebracht sein könnte. Vorteilhafterweise wird hierdurch die Zuführung der Adhäsivfolie zuverlässiger, sodass eine gleichmäßige Kontaktierung an die erste Katalysatorschicht ermöglicht wird. In alternativen Ausführungsformen weist die Adhäsivfolie keine Schutzfolie auf, sondern liegt beispielsweise analog zu einem Klebestreifen ohne separaten Schutzfilm auf einer Aufwicklungsrolle vor.

In der bevorzugten Ausführungsform, in der die Adhäsivolie ein Substrat und eine Adhäsivschicht umfasst, liegt der Schutzfilm auf der Adhäsivschicht vor. Vorzugsweise liegt der Schutzfilm im Wesentlichen passgenau auf der Adhäsivfolie vor und wird über die Haftwirkung der Adhäsivschicht gehalten. Hierbei ist es bevorzugt, dass die Klebekraft zwischen dem Schutzfilm und der Adhäsivfolie einerseits ausreichend ist, um eine zuverlässige Prozessierung in einem Rolle-zu-Rolle Prozess zu gewährleisten und andererseits nicht zu groß, um beim Ablösen des Schutzfilms ein teilweises Ablösen der Adhäsivschicht vom Substrat zu bewirken. Zur Anbringung der Adhäsivfolie an die erste Katalysatorschicht wird zuvor der Schutzfilm entfernt, was beispielsweise durch eine dafür eingerichtete Rolle erfolgen kann. Der Schutzfilm kann beispielsweise ein Material umfassen ausgewählt aus einer Gruppe umfassend der Polyester, beispielsweise Polyethylenterephthalat (PET).

In einer weiteren bevorzugten Ausführungsform ist das Verfahren dadurch gekennzeichnet, dass das Verfahren über einen Rolle-zu-Rolle Prozess ausgeführt wird, wobei bevorzugt die Adhäsivfolie über eine Beschichtungsrolle auf die erste Katalysatorschicht aufgebracht wird und eine Beschichtung der zweiten Katalysatorschicht im Anschluss erfolgt, noch während die Polymermembran entlang der Beschichtungsrolle geführt wird.

Der Rolle-zu-Rolle Prozess bezeichnet ein Fertigungsverfahren, bei dem eine oder mehrere Rollen und/oder Walzen verwandt werden, um Prozessschritte wie z. B. Beschichten, Auftragen und/oder Laminieren, auszuüben. Die Anzahl der Rollen und/oder Walzen wird als Bahnlauf bezeichnet und kann vom Fachmann bestimmt werden.

Im erfindungsgemäßen Kontext wird vorzugsweise die Trägerfolie, die Polymermembran und die erste Katalysatorschicht über eine erste Rolle kontinuierlich im Verfahren zugeführt. Dabei ist es bevorzugt, dass der Verbund umfassend Trägerfolie, Polymermembran und erste Katalysatorschicht entlang der ersten Rolle aufgewickelt ist. Ferner kann es bevorzugt sein, über eine zweite Rolle, welche auch als Umlenkrolle bezeichnet werden kann, eine Umlenkung des zu Beginn des Verfahrens eingesetzten Verbundes zu ermöglichen, durch die die Aufbringung der Adhäsivfolie auf die erste Katalysatorschicht und/oder die Entfernung der Trägerfolie stattfinden kann.

Vorzugsweise erfolgt die Bereitstellung der Adhäsivfolie durch eine weitere Rolle, die im erfindungsgemäßen Sinne auch als Abwicklungsrolle für die Adhäsivfolie bezeichnet werden kann. Die Aufbringung der Adhäsivfolie auf die erste Katalysatorschicht erfolgt hingegen bevorzugt über eine Beschichtungsrolle, wobei eine Beschichtung der zweiten Katalysatorschicht im Anschluss erfolgt, noch während die Polymermembran entlang der Beschichtungsrolle geführt wird. Anders ausgedrückt, wird bevorzugt durch die Abwicklungsrolle für die Adhäsivfolie diese bereitgestellt, während durch die Beschichtungsrolle die Adhäsivfolie von der Abwicklungsrolle abgezogen wird sowie die Beschichtung mit der zweiten Katalysatorschicht ermöglicht. Um für eine zuverlässige Haftung der Adhäsivfolie zu sorgen, wird die Adhäsivfolie bevorzugt derart aufgebracht, dass die Aufbringung als solche im Wesentlichen parallel zum Flächennormalvektor und demnach senkrecht zur Schnittebene der ersten Katalysatorschicht bzw. der Polymermembran gerichtet ist. Somit kann die Aufbringung der Adhäsivfolie auf die erste Katalysatorschicht vorzugsweise sowohl über Druckspannung als auch über Zugspannung ausgeführt werden. Wirkt die Kraft für die Aufbringung der Adhäsivfolie, aus der die Spannung resultiert, derart, dass an der Schnittebene ein Ziehen der Polymermembran bzw. ersten Katalysatorschicht erfolgt, spricht man von Zugspannung. Wenn die angreifende Spannung jedoch einen Druck gegen die Schnittebene ausübt, wird sie vorzugsweise als Druckspannung bezeichnet. In der Ausführungsform, in der die Adhäsivfolie mit einem Schutzfilm vorliegt, wird vorzugsweise über eine Abwicklungsrolle für den Schutzfilm die Entfernung des Schutzfilmes ausgeführt, bevor die Aufbringung der Adhäsivfolie auf die erste Katalysatorschicht stattfinden kann.

Die Entfernung der Trägerfolie kann bevorzugt über eine Aufwicklungsrolle für die Trägerfolie erfolgen, auf der die Trägerfolie, welche zu Beginn des Verfahrens eingesetzt wird, aufgewickelt wird. Es kann bevorzugt sein, dass die Rollen derart konfiguriert sind, dass die Aufbringung der Adhäsivfolie ausgeführt wird, bevor die Trägerfolie entfernt wird. Ebenfalls kann es bevorzugt sein, dass die Aufbringung der Adhäsivfolie stattfindet, nachdem die Trägerfolie entfernt wurde. Die Aufwicklungsrolle für die Entfernung der Trägerfolie kann bevorzugt als Keil vorliegen, sodass über den Keil die Trägerfolie entfernt wird. Hierdurch wird garantiert, dass die Entfernung der Trägerfolie den weiteren Herstellungsablauf nicht stört.

Vorzugsweise wird der Verbund umfassend Adhäsivfolie, erste Katalysatorschicht und Polymermembran entlang einer Beschichtungsrolle geführt. Noch während der Führung entlang der Beschichtungsrolle wird die Rückseite der Polymermembran mit der zweiten Katalysatorschicht beschichtet. Die Beschichtungsrolle bezeichnet eine Rolle, welche dazu konfiguriert ist, die Adhäsivfolie ausgehend von der Abwicklungsrolle für die Adhäsivfolie abzuziehen und auf die erste Katalysatorschicht aufzubringen sowie die Polymermembran derart zu positionieren, sodass die zweite Katalysatorschicht auf die Rückseite der Polymermembran beschichtet werden kann. Vorteilhaft wird hierdurch eine erhebliche Effizienz erzielt, da dies einen stetigen Verfahrensablauf gewährleistet, um den für die Beschichtung notwendige Stabilität zur Beibehaltung der Form der Polymermembran zu ermöglichen.

Der Einsatz eines Rolle-zu-Rolle Prozesses erlaubt es vorteilhafterweise, die Bahngeschwindigkeit präzise zu bestimmen, insbesondere im Hinblick auf die auszuführenden Verfahrensschritte. So kann es bevorzugt sein, dass die Schritte des Verfahrens kontinuierlich mit einer im Wesentlichen gleichen und konstanten Geschwindigkeit ablaufen. Es kann auch bevorzugt sein, dass die Bahngeschwindigkeit intermittierend ist, sodass, je nach Herstellungsschritt, eine schnellere oder langsamere Bahngeschwindigkeit bevorzugt ist.

Vorzugsweise kann durch die Größe, insbesondere durch den Durchmesser, der Beschichtungsrolle ein Zeitfenster festgelegt werden, innerhalb derer die Beschichtung der zweiten Katalysatorschicht erfolgen soll. Typischerweise liegt ein größeres Zeitfenster vor, wenn die Beschichtungsrolle über größere Abmaße verfügt. Auch die Rollgeschwindigkeit der Beschichtungsrolle kann das Zeitfenster (mit-)bestimmen, um die Beschichtung mit der zweiten Katalysatorschicht vorzunehmen. Die Beschichtung der zweiten Katalysatorschicht erfolgt bevorzugt am Auslass der Schlitzdüse. Die Größe der Rolle bestimmt somit das Zeitfenster, über welches die Adhäsivfolie auf die erste Katalysatorschicht aufgebracht bzw. gedrückt wird.

In einer weiteren bevorzugten Ausführungsform ist das Verfahren dadurch gekennzeichnet, dass die Beschichtung einer zweiten Katalysatorschicht mit einem Beschichtungsverfahren ausgeführt wird, ausgewählt aus einer Gruppe umfassend Schlitzdüsen-Beschichtung, Sprühbeschichtung, Siebdruckverfahren, Rakelbeschichtung, und/oder Tiefdruckverfahren, wobei besonders bevorzugt eine Schlitzdüsen-Beschichtung zum Einsatz kommt.

Die aufgezählten Verfahren als solche sind dem Fachmann bekannt. Im Kontext der Erfindung haben sich die genannten Verfahrensoptionen als zuverlässig erwiesen, um die Beschichtung der zweiten Katalysatorschicht auf die Rückseite der Polymermembran vornehmen zu können. Insbesondere können die genannten Verfahren auf einfache Weise in einem Rolle-zu-Rolle Prozess integriert werden, wodurch die Effizienz des Herstellungsverfahrens verbessert wird. Zur Ausführung eines bevorzugten Verfahrens, um die zweite Katalysatorschicht zu beschichten, wird vorzugsweise eine entsprechende Beschichtungskomponente eingesetzt. Die bevorzugte Beschichtungskomponente ist dazu ausgelegt, ein gewähltes Beschichtungsverfahren auszuführen.

Der Einsatz einer Schlitzdüsen-Beschichtung ist insbesondere dahingehend von Vorteil, um präzise die aufzutragende Menge der zweiten Katalysatorschicht vorzubestimmen. Ferner wird eine gleichmäßige Verteilung der Katalysatorschicht auf die Rückseite der Polymermembran erzielt, sodass die zweite Katalysatorschicht homogen verteilt wird bzw. sich ausbreiten kann, wenn es in flüssiger Phase aufgetragen wird. Insbesondere werden vorteilhaft keine oder nur unwesentliche Variationen der Dicke der zweiten Katalysatorschicht beim Einsatz einer Schlitzdüsen-Beschichtung erlangt, was für den Betrieb in einer Brennstoffzelle und/oder Elektrolysezelle besonders vorteilhaft ist. Bei einer Schlitzdüsen-Beschichtung wird bevorzugt eine Schlitzdüsen-Beschichtungskomponente eingesetzt, welche eine Düse und einen Gießkopf umfasst. In dem Gießkopf wird vorzugsweise das Material für die zweite Katalysatorschicht eingeführt, welche über die Düse auf die Polymermembran aufgebracht wird.

In einer weiteren bevorzugten Ausführungsform ist das Verfahren dadurch gekennzeichnet, dass die zweite Katalysatorschicht nach der Beschichtung auf die Polymermembran mit einem Trocknungsverfahren getrocknet wird, wobei bevorzugt das Trocknungsverfahren ausgewählt ist aus einer Gruppe umfassend Heißlufttrocknung, Infrarottrocknung, Plasmatrocknung, und/oder Kontakttrocknung (z. B. über einen Heizzylinder oder eine Heizwalze), wobei bevorzugt eine Trocknungszeit zwischen 1 - 30 min, bevorzugt zwischen 1 - 5 min, besonders bevorzugt zwischen 1 - 4 min und/oder eine Temperatur zwischen 20°C - 150°C, bevorzugt zwischen 20°C - 100°C oder 40° - 100°C eingesetzt wird.

Durch das Trocknen kann die zweite Katalysatorschicht verfestigt werden, woraufhin der Einsatz in einer Brennstoffzelle und/oder Elektrolysezelle ermöglicht werden kann. Beim Trocknen wird Feuchtigkeit, insbesondere durch Verdunstung oder Verdampfung, der zweiten Katalysatorschicht entzogen. Dies kann durch die Anwendung von einem oder mehreren der oben genannten Trocknungsverfahren erzielt werden. Vorzugsweise weist die zweite Katalysatorschicht einen trockenen Zustand auf, wenn der Anteil an Feuchtigkeit ca. 30 % oder weniger beträgt.

Je nach Trocknungsverfahren und/oder eingesetzter Temperatur kann die Trocknungszeit variiert werden. Typischerweise kann die Trocknungszeit verkürzt werden, wenn eine höhere Temperatur aufgebracht wird. So ist es beispielsweise bevorzugt, dass die Trocknungszeit ca. 30 min beträgt, wenn das Trocknen bei Raumtemperatur stattfindet (d. h. bei ca. 20°C). Bei höheren Temperaturen von beispielsweise ca. 150°C kann die Trocknungszeit beispielsweise auf 4 min verkürzt werden. Die Trocknungszeit kann beispielsweise über eine Strecke festgelegt werden, die zwischen der Beschichtungsrolle und eine Aufwicklungsrolle bei einem Rolle-zu-Rolle Prozess festgelegt wird. Innerhalb der Strecke, die auch als Trocknungsstrecke bezeichnet werden kann, kann bevorzugt ein Trocknungsverfahren zur Trocknung der zweiten Katalysatorschicht verwandt werden.

In einer weiteren bevorzugten Ausführungsform ist das Verfahren dadurch gekennzeichnet, dass die Polymermembran auf Basis der Kohlenwasserstoff-Ionomere frei von perfluorierten Sulfonsäuren, vorzugweise im Wesentlichen fluorfrei ist.

Sulfonsäuren sind bekannt als organische Schwefelverbindungen mit der allgemeinen Struktur R-SO₂-OH, wobei R einen organischen Rest, SO₂ Schwefeldioxid und OH die Hydroxygruppe bezeichnet.

Perfluoriert bedeutet, dass an mindestens einem Kohlenstoffatom des Kohlenstoffgerüstes der Sulfonsäure, an dem Wasserstoffatome gebunden sind, diese Wasserstoffatome vollständig durch Fluoratome ersetzt sind. Es können vorzugsweise auch die Wasserstoffatome von mehreren Kohlenstoffatomen oder von allen Kohlenstoffatomen des Kohlenstoffgerüstes durch Fluoratome ersetzt sein.

Frei von perfluorierten Sulfonsäuren meint bevorzugt, dass die Polymermembran einen Anteil von höchsten bis zu 5 Molprozent, besonders bevorzugt von höchstens bis zu 2,5 Molprozent, ganz besonders bevorzugt von höchsten bis zu 1 Molprozent aufweist.

Im Wesentlichen fluorfrei meint vorzugsweise, dass Fluoranteile vorliegen von höchstens bis zu 5 Molprozent, höchstens bis zu 2,5 Molprozent oder höchstens bis zu 1 Molprozent. Dass die Polymermembran im Wesentlichen fluorfrei ist, kann besonders bevorzugt bedeuten, dass die Polymermembran vollständig frei von Fluor ist.

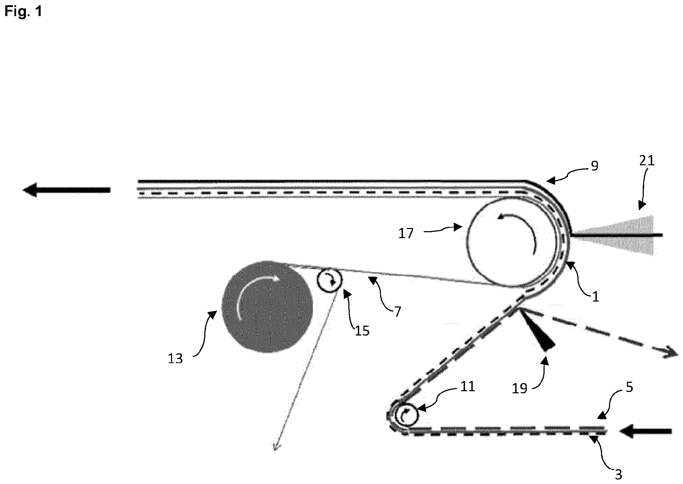

Vorzugsweise umfasst die Polymermembran sulfo-phenlyiertes Polyarylen (sPPX), insbesondere sulfo-phenlyiertes Polyphenylen (sPPP), d. h. sulfo-phenyliertes Polyarylen, welches einem phenylen-Linker in der Hauptkette des lonomers aufweist. Sulfo-phenyliertes Polyphenylen ermöglicht für die Polymermembran eine hohe mechanische Robustheit sowie hohe ionische (protonische) Leitfähigkeit, was für den Betrieb in einer Brennstoffzelle und/oder Elektrolysezelle besonders vorteilhaft ist. Das sulfo-phenylierte Polyphenylen kann bevorzugt die Struktur aufweisen, wie sie in der Fig. 1 des Papers Nguyen, Hien, et al. "Hydrocarbon-based Pemion™ proton exchange membrane fuel cells with state-of-the-art performance." Sustainable Energy & Fuels 5.14 (2021): 3687-3699 offenbart wird oder in der Fig. 1 der Patentanmeldung WO 2018/187864 A1.

In einer weiteren bevorzugten Ausführungsform ist das Verfahren dadurch gekennzeichnet, dass die Polymermembran eine Dicke aufweist zwischen 10 - 500 µm, bevorzugt zwischen 10 - 350 µm, besonders bevorzugt zwischen 10 - 250 µm, ganz besonders bevorzugt zwischen 10 - 50 µm.

Die genannten Bereiche für die Dicke der Polymermembran haben sich als vorteilhaft erwiesen, um eine hohe ionische bei gleichzeitig geringer elektrischer Leitfähigkeit sowie eine hohe chemische Beständigkeit, beispielsweise gegen Peroxide, Hydrolyse- und/oder Redoxreaktionen, sowie eine hohe mechanische Stabilität aufzuweisen, um eine sichere und langanhaltende Betriebstauglichkeit in einer Brennstoffzelle und/oder Elektrolysezelle gewährleisten zu können.

In einer weiteren bevorzugten Ausführungsform ist das Verfahren dadurch gekennzeichnet, dass die erste und/oder zweite Katalysatorschicht als disperse Flüssigkeit auf die Polymermembran beschichtet wird.

Eine disperse Flüssigkeit oder auch Dispersion bezeichnet ein heterogenes Stoffgemisch, welches zwei oder mehr Substanzen aufweist, die nicht oder nur kaum ineinander gelöst werden können. Typischerweise weist die Katalysatorschicht eine Mehrzahl an Komponenten auf. Diese können unterschiedliche Funktionen gewährleisten, um eine sichere Bindung an die Polymermembran und/oder eine optimale Performance beim Betrieb der Brennstoffzelle und/oder Elektrolysezelle zu ermöglichen.

In einer weiteren bevorzugten Ausführungsform ist das Verfahren dadurch gekennzeichnet, dass für die Beschichtung der ersten und/oder zweiten Katalysatorschicht eine Katalysatortinte bereitgestellt wird, wobei bevorzugt die Katalysatortinte ein Katalysatormaterial, ein Trägermaterial, ein Lösungsmittel und/oder ein Bindermaterial umfasst.

Bevorzugt ist das Katalysatormaterial ein Material ausgewählt aus einer Gruppe umfassend Platin, Ruthenium, Rhodium, Iridium, Palladium, Gold, Silber, Chrom, Mangan, Kupfer, Kobalt, Nickel, Eisen, Molybdän und/oder Yttrium. Das Katalysatormaterial dient der eigentlichen katalytischen Wirkung während der chemischen Reaktion beim Betrieb der Brennstoffzelle und/oder Elektrolysezelle. Das Katalysatormaterial kann als Pulver oder als Partikel vorliegen, wodurch die Katalysatortinte ihren dispersen Charakter erlangt.

Das Trägermaterial umfasst bevorzugt Kohlenstoff, vorzugsweise in Graphitform. Das Trägermaterial dient insbesondere der vorteilhaften Verteilung des Katalysatormaterials. Ferner kann durch das Trägermaterial die aktive Oberfläche des genutzten Katalysatormaterials erhöht werden. Des Weiteren kann durch das Trägermaterial die Stabilität und der Ladungstransport begünstigt werden.

Vorzugsweise umfasst das Lösungsmittel ein Material ausgewählt aus einer Gruppe umfassend Wasser, ein organisches Lösungsmittel, vorzugsweise Ethanol, Propanol und/oder Butanol und/oder Lösungsmittelgemische. Das Lösungsmittel verleiht der Katalysatorschicht ihr dispersives Verhalten und wird im Wesentlichen bei einer optionalen Trocknung verdampft oder verdunstet.

Als Bindermaterial wird bevorzugt ein Kohlenwasserstoff-basiertes lonomer verwendet. Das Bindermittel dient vorzugsweise dazu, sowohl eine langanhaltende stabile Verbindung zwischen dem Katalysatormaterial und der Polymermembran als auch eine protonische Leitfähigkeit innerhalb der Katalysatorschicht zu ermöglichen.

In einer weiteren bevorzugten Ausführungsform ist das Verfahren dadurch gekennzeichnet, dass die Trägerfolie ein Material umfasst, ausgewählt aus einer Gruppe umfassend Polyester (wie z. B. Polyethylenterephthalat (PET) und/oder Polyethylennaphthalat (PEN)), Polyethylen, Polytetrafluorethylen (PTFE), Polypropylen (PP), Polyvinylchlorid (PVC), Polycarbonat, Polyamid, Polyimid und/oder Polyurethan.

In einer weiteren bevorzugten Ausführungsform ist das Verfahren dadurch gekennzeichnet, dass die Trägerfolie eine Dicke aufweist zwischen 0,01 - 2 mm, bevorzugt zwischen 0,1 - 0,5 mm, besonders bevorzugt zwischen 0,1 - 0,3 mm.

Die aufgezählten Materialien und/oder Bereiche für die Dicke der Trägerfolie haben sich als vorteilhaft erwiesen, um einerseits stabil und langanhaltend zu Beginn des Verfahrens als Stütze für die Polymermembran und erste Katalysatorschicht zu fungieren und andererseits einfach von der Rückseite der Polymermembran entfernt werden zu können, ohne dass Rückstände an der Polymermembran verbleiben. Hierdurch kann die Homogenität der zu beschichtenden zweiten Katalysatorschicht auf der Rückseite der Polymermembran und damit auch die Performance einer Brennstoffzelle und/oder Elektrolysezelle verbessert werden.

In einem weiteren Aspekt betrifft die Erfindung eine Membran-Elektroden-Einheit herstellbar mit einem Verfahren gemäß dem vorher Beschriebenen.

Der durchschnittliche Fachmann erkennt, dass technische Merkmale, Definitionen und Vorteile von Ausführungsformen, welche für das Verfahren zur Herstellung der Membran-Elektroden-Einheit gelten, gleichermaßen für die Membran-Elektroden-Einheit zutreffen, und umgekehrt.

Wie obig erläutert, umfasst die Membran-Elektroden-Einheit die Polymermembran sowie die vorderseitige erste Katalysatorschicht und die rückseitige zweite Katalysatorschicht.

Nach der Herstellung der Membran-Elektroden-Einheit kann sich auf der ersten Katalysatorschicht die Adhäsivfolie befinden, sodass das Endprodukt die Membran-Elektroden-Einheit und die Adhäsivfolie umfassen kann. Weiterhin kann es bevorzugt sein, dass das eine Trennfolie auf der zweiten Katalysatorschicht aufgebracht vorliegt. Vorteilhafterweise kann hierdurch eine Stapel von Membran-Elektroden-Einheiten bereitgestellt werden, die aufeinander positioniert und/oder gestapelt sind, ohne dass eine der Katalysatorschichten direkt mit einer anderen Katalysatorschicht einer anderen Membran-Elektroden-Einheit kontaktiert ist. Hierdurch wird den Katalysatorschichten der Membran-Elektroden-Einheiten ein zuverlässiger Schutz geboten. Mithin kann das Endprodukt des Herstellungsverfahrens die Adhäsivfolie und/oder Schutzfolie mitsamt der Membran-Elektroden-Einheit umfassen. Zumindest umfasst das Endprodukt die hergestellte Membran-Elektroden-Einheit.

Ebenfalls kann es bevorzugt sein, dass die Membran-Elektroden-Einheit mitsamt einer weiteren Trägerfolie vorliegt, welche zuvor mit der Adhäsivfolie ersetzt wurde. Die Membran-Elektroden-Einheit kann mit der weiteren Trägerfolie an dem Ort der Integration in eine Brennstoffzelle und/oder Elektrolysezelle transportiert werden. Die weitere Trägerfolie entspricht dann vorzugsweise einer Transportfolie und erfüllt eine Schutzfunktion, insbesondere während des Transports.

Es kann auch bevorzugt sein, die Membran-Elektroden-Einheit ohne weitere Folie direkt in eine Brennstoffzelle und/oder Elektrolysezelle integriert wird.

In einem weiteren Aspekt betrifft die Erfindung die Verwendung der mittels des beschriebenen Verfahrens herstellbaren Membran-Elektroden-Einheit für elektrochemische Anwendungen, vorzugsweise ausgewählt aus einer Gruppe umfassend Wasserstoff-Brennstoffzellen, Elektrolysezellen, Power-to-X-Anwendungen, insbesondere für eine COz-Elektrolyse und/oder Ammoniakelektrolyse.

Der durchschnittliche Fachmann erkennt, dass technische Merkmale, Definitionen und Vorteile von Ausführungsformen, welche für das Verfahren zur Herstellung der Membran-Elektroden-Einheit und/oder für die Membran-Elektroden-Einheit als solche gelten, gleichermaßen für die Verwendung der Membran-Elektroden-Einheit zutreffen, und umgekehrt.

Beim Einsatz in einer Brennstoff- und/oder Elektrolysezelle fungiert die Membran-Elektroden-Einheit als Separator der die Anoden- und die Kathodenseite der CCM und ist selektiv durchlässig. In den Elektrodenschichten finden die jeweiligen chemischen Redoxreaktionen bzw. Teilreaktionen statt, die sich zu einer Gesamtreaktion addieren und für den Reaktionsablauf innerhalb der Brennstoffzelle und/oder Elektrolysezelle verantwortlich sind.

Power-to-X-Anwendungen bezeichnen bevorzugt Technologien, bei denen überschüssiger elektrischer Strom in chemische Energieträger zur Stromspeicherung, in strombasierte Kraftstoffe zur Mobilität und/oder in Rohstoffe für die Chemieindustrie umgewandelt wird. Der Ausdruck "Power" bezeichnet die über dem Bedarf liegenden zeitweisen Stromüberschüsse und "X" steht für die Energieform oder den Verwendungszweck. Unterteilt werden die Power-to-X-Anwendungen daher nach Verwendungszweck (z. B. Power-to-Fuel, Power-to-Chemicals oder Power-to-Ammonia) bzw. Nach Energieform (Power-to-Gas, Power-to-Heat, Power-to-Liquid). Vorteilhaft kann die Membran-Elektroden-Einheit auch in solchen Anwendungen eingesetzt werden, sodass vielfältige energietechnische Applikationen für die Membran-Elektroden-Einheit zur Verfügung stehen.

Die erfindungsgemäßen Aspekte sollen im Folgenden anhand von Figuren näher erläutert werden, ohne auf diese Figuren beschränkt zu sein.

### FIGUREN

### Kurzbeschreibung der Figuren

- **Fig. 1**: Schematische Darstellung zur Ausführung einer bevorzugten Ausführungsform des erfindungsgemäßen Verfahrens zur Herstellung einer Membran-Elektroden-Einheit

### Detaillierte Beschreibung der Figuren

Fig. 1 stellt schematisch die Schritte zur Ausführung des Verfahrens dar, um die Membran-Elektroden-Einheit herzustellen.

Zunächst wird eine Polymermembran **1** aus Basis von Kohlenwasserstoff-Ionomeren umfassend eine Vorderseite und eine Rückseite bereitgestellt. Auf der Rückseite liegt eine Trägerfolie **5** vor, während auf der Vorderseite die erste Katalysatorschicht **3** vorliegt. Die Trägerfolie **5** wird entfernt, sodass die Rückseite der Polymermembran **1** frei zugänglich ist. Eine Adhäsivfolie **7** wird auf die vorderseitige erste Katalysatorschicht **3** aufgebracht. Daraufhin erfolgt die Beschichtung einer zweiten Katalysatorschicht **9** auf die Rückseite der Polymermembran **1.**

Vorteilhaft wird durch die Aufbringung der Adhäsivfolie **7** auf die vorderseitige erste Katalysatorschicht **3** eine stabilisierende Wirkung für die Beschichtung der zweiten Katalysatorschicht **9** auf die Rückseite der Polymermembran **1** erzielt. Daher fungiert die Adhäsivfolie **7** als Stabilisator für die Polymermembran **1,** während die Beschichtung der zweiten Katalysatorschicht **9** erfolgt. Die stabilisierende Wirkung ist durch die Adhäsivfolie **7** besonders ausgeprägt, da durch ihre adhäsive Eigenschaft ein hinreichend mechanischer Widerstand geboten wird, wenn die Beschichtung der zweiten Katalysatorschicht **9** stattfindet, sodass Verformungen, Schwellungen und/oder Auf- und/oder Abquellungen der Polymermembran **1** verhindert werden. Hierdurch wird vorteilhaft eine homogene, insbesondere eine glatte und faltenfreie Membran-Elektroden-Einheit hergestellt, wodurch eine zuverlässige Funktionstauglichkeit beim Einsatz in einer Brennstoffzelle und/oder Elektrolysezelle gewährleistet wird.

Von weiterem Vorteil ist, dass sich das Verfahren im Rahmen einer Massenproduktion anwenden lässt, sodass es auch in industriellem Maßstab eingesetzt werden kann. Somit lassen sich sowohl kostengünstig als auch massentauglich Membran-Elektroden-Einheiten herstellen, welche insbesondere in einer Brennstoffzelle und/oder Elektrolysezelle eingesetzt werden können. Ein weiterer Vorteil des erfindungsgemäßen Verfahrens ist, dass sich dieses als folienbasiertes Herstellungsverfahren im Rahmen eines Rolle-zu-Rolle-Prozesses im industriellem Maßstab eingesetzt werden kann. Somit lassen sich sowohl kostengünstig als auch massentauglich Membran-Elektroden-Einheiten herstellen, welche in einer Brennstoffzelle und/oder Elektrolysezelle eingesetzt werden können. Eine Ausführung des Verfahrens in einem Rolle-zu-Rolle Prozess ist in der Fig. 1 dargestellt, was im Folgenden näher beschrieben werden soll.

In dem Rolle-zu-Rolle Prozess wird der Verbund umfassend die Trägerfolie **5,** die Polymermembran **1** und die erste Katalysatorschicht **3** über eine erste Rolle kontinuierlich zugeführt (nicht dargestellt). Über eine zweite Rolle bzw. Umlenkrolle **11** kann eine Umlenkung des zu Beginn des Verfahrens eingesetzten Verbundes ermöglicht werden, durch die die Aufbringung der Adhäsivfolie **7** auf die erste Katalysatorschicht **3** und/oder die Entfernung der Trägerfolie **5** stattfinden kann. Die Aufbringung der Adhäsivfolie **7** auf die erste Katalysatorschicht **3** erfolgt durch eine Beschichtungsrolle **17.** Die Beschichtungsrolle **17** zieht die Adhäsivfolie **7** von einer Abwicklungsrolle **13** ab, welche die Adhäsivfolie **7** bereitstellt. Um eine zuverlässige Haftung der Adhäsivfolie **7** zu ermöglichen, wird die Adhäsivfolie **7** derart aufgebracht, dass sie im Wesentlichen parallel zum Flächennormalvektor und demnach senkrecht zur Schnittebene der ersten Katalysatorschicht **3** bzw. der Polymermembran **1** gerichtet ist. Somit kann die Aufbringung der Adhäsivfolie **7** auf die erste Katalysatorschicht **3** sowohl über Druckspannung als auch über Zugspannung ausgeführt werden. Vorzugsweise liegt auf der Adhäsivfolie **7** ein Schutzfilm vor, der durch eine Aufwicklungsrolle **15** für den Schutzfilm entfernt werden kann, bevor die Adhäsivfolie **7** auf der ersten Katalysatorschicht **3** aufgebracht wird.

Die Entfernung der Trägerfolie **5** kann über einen Keil **19** oder eine Aufwicklungsrolle für die Trägerfolie erfolgen, auf welcherdie Trägerfolie **5,** welche zu Beginn des Verfahrens eingesetzt wird, aufgewickelt wird. In der Darstellung der Fig. 1 wird die Adhäsivfolie **7** aufgebracht, nachdem die Trägerfolie **5** entfernt wurde. Für die Entfernung der Trägerfolie **5** kann wie in der Fig. 1 gezeigt, ein Keil **19** eingesetzt werden, wobei eine Aufwicklung der Trägerfolie **5** über eine Aufwicklungsrolle an anderer Position erfolgt (angedeutet durch einen gestrichenen Pfeil).

Der Verbund umfassend Adhäsivfolie **7,** erste Katalysatorschicht **3** und Polymermembran **1** wird entlang der Beschichtungsrolle **17** geführt. Noch während der Führung entlang der Beschichtungsrolle **17** wird die Rückseite der Polymermembran mit der zweiten Katalysatorschicht **9** beschichtet. Die Beschichtungsrolle **17** bezeichnet eine Rolle, welche dazu konfiguriert ist, die Adhäsivfolie **7** ausgehend von der Abwicklungsrolle **13** für die Adhäsivfolie abzuziehen und auf die erste Katalysatorschicht aufzubringen sowie die Polymermembran derart zu positionieren, dass die zweite Katalysatorschicht **9** auf die Rückseite der Polymermembran **1** aufgebracht bzw. beschichtet werden kann. Die Beschichtung der zweiten Katalysatorschicht erfolgt über ein Beschichtungsverfahren, welches von einer entsprechenden Beschichtungskomponente **21** ausgeführt wird. Vorteilhaft wird hierdurch eine erhebliche Effizienz erzielt, da dies einen stetigen Verfahrensablauf gewährleistet, um die für die Beschichtung notwendige Stabilität zur Beibehaltung der Form der Polymermembran **1** zu ermöglichen.

### BEZUGZSZEICHENLISTE

- 1: Polymermembran
- 3: Erste Katalysatorschicht
- 5: Trägerfolie
- 7: Adhäsivfolie
- 9: Zweite Katalysatorschicht
- 11: Umlenkrolle
- 13: Abwicklungsrolle für Adhäsivfolie
- 15: Aufwicklungsrolle für Schutzfilm
- 17: Beschichtungsrolle
- 19: Keil oder Aufwicklungsrolle für Trägerfolie
- 21: Beschichtungskomponente

## Patentansprüche

1. Verfahren zur Herstellung einer Membran-Elektroden-Einheit für eine Brennstoffzelle und/oder eine Elektrolysezelle umfassend folgende Schritte:
a) Bereitstellung einer Polymermembran (1) auf Basis von Kohlenwasserstofflonomeren umfassend eine Vorderseite und eine Rückseite, wobei auf der Rückseite eine Trägerfolie (5) und auf der Vorderseite eine erste Katalysatorschicht (3) vorliegt,
b) Entfernung der Trägerfolie (5), sodass die Rückseite der Polymermembran (1) frei zugänglich ist,
c) Aufbringung einer Adhäsivfolie (7) auf die vorderseitige, erste Katalysatorschicht (3),
d) Beschichtung einer zweiten Katalysatorschicht (9) auf die Rückseite der Polymermembran (1).

2. Verfahren nach dem vorherigen Anspruch
**dadurch gekennzeichnet, dass**
die Adhäsivfolie (7) mit einer Klebekraft von 0,1 - 10 cN/mm, bevorzugt von 0,5 - 5 cN/mm, besonders bevorzugt von 1 - 3 cN/mm, die Polymermembran (1) kontaktiert.

3. Verfahren nach einem oder mehreren der vorherigen Ansprüche
**dadurch gekennzeichnet, dass**
die Adhäsivfolie (7) einen mehrschichtiger Aufbau aufweist und ein Substrat sowie eine Adhäsivschicht umfasst, wobei bei der Aufbringung der Adhäsivfolie (7) deren Adhäsivschicht die erste Katalysatorschicht (3) kontaktiert werden.

4. Verfahren nach dem vorherigen Anspruch
**dadurch gekennzeichnet, dass**
das Substrat ausgewählt ist aus einer Gruppe von Polyester - vorzugsweise Polyethylenterephthalat, Polyethylennaphthalat - oder aus einer Gruppe von Polyolefine, vorzugsweise Polyethylen, Polypropylen oder einer Gruppe von Polyimiden und/oder Polyamiden, Polyvinylchlorid und/oder die Adhäsivschicht durch ein Klebematerial gebildet wird ausgewählt aus einer Gruppe umfassend ein Acrylat, Kautschuk und/oder Silikon.

5. Verfahren nach einem oder mehreren der vorherigen Ansprüche
**dadurch gekennzeichnet, dass**
die Adhäsivfolie (7) eine Dicke von 10 µm - 1 mm, bevorzugt von 20 µm - 500 µm, besonders bevorzugt von 40 µm - 200 µm.

6. Verfahren nach einem oder mehreren der vorherigen Ansprüche
**dadurch gekennzeichnet, dass**
die Adhäsivfolie (7) nach einer Beschichtung der zweiten Katalysatorschicht (9) entfernt und/oder für ein Recycling auf einer Aufwicklungsrolle aufgewickelt wird.

7. Verfahren nach einem oder mehreren der vorherigen Ansprüche
**dadurch gekennzeichnet, dass**
die Adhäsivofolie (7) einen Schutzfilm aufweist, wobei der Schutzfilm vor der Aufbringung der Adhäsivfolie auf die erste Katalysatorschicht entfernt wird.

8. Verfahren nach einem oder mehreren der vorherigen Ansprüche
**dadurch gekennzeichnet, dass**
das Verfahren über einen Rolle-zu-Rolle Prozess ausgeführt wird, wobei bevorzugt die Adhäsivfolie (7) über eine Beschichtungsrolle auf die erste Katalysatorschicht (3) aufgebracht wird und eine Beschichtung der zweiten Katalysatorschicht (9) im Anschluss erfolgt, noch während die Polymermembran (1) entlang der Beschichtungsrolle geführt wird.

9. Verfahren nach einem oder mehreren der vorherigen Ansprüche
**dadurch gekennzeichnet, dass**
die Beschichtung einer zweiten Katalysatorschicht (9) mit einem Beschichtungsverfahren ausgeführt wird, ausgewählt aus einer Gruppe umfassend Schlitzdüsen-Beschichtung, Sprühbeschichtung, Siebdruckverfahren, Rakelbeschichtung, und/oder Tiefdruckverfahren, wobei besonders bevorzugt eine Schlitzdüsen-Beschichtung zum Einsatz kommt.

10. Verfahren nach einem oder mehreren der vorherigen Ansprüche
**dadurch gekennzeichnet, dass**
die zweite Katalysatorschicht (9) nach der Beschichtung auf die Polymermembran (1) mit einem Trocknungsverfahren getrocknet wird, wobei bevorzugt das Trocknungsverfahren ausgewählt ist aus einer Gruppe umfassend Heißlufttrocknung, Infrarottrocknung, Plasmatrocknung und/oder Kontakttrocknung,
wobei bevorzugt eine Trocknungszeit zwischen 1 - 30 min, bevorzugt zwischen 1 - 5 min, besonders bevorzugt zwischen 1 - 4 min und/oder eine Temperatur zwischen 20°C - 150°C, bevorzugt zwischen 20°C - 100°C eingesetzt wird.

11. Verfahren nach einem oder mehreren der vorherigen Ansprüche
**dadurch gekennzeichnet, dass**
die Polymermembran (1) auf Basis der Kohlenwasserstoff-Ionomere frei von perfluorierten Sulfonsäuren, vorzugweise im Wesentlichen fluorfrei ist.

12. Verfahren nach einem oder mehreren der vorherigen Ansprüche
**dadurch gekennzeichnet, dass**
die erste und/oder zweite Katalysatorschicht (9) als disperse Flüssigkeit auf die Polymermembran (1) beschichtet wird.

13. Verfahren nach einem oder mehreren der vorherigen Ansprüche
**dadurch gekennzeichnet, dass**
für die Beschichtung der erste und/oder zweiten Katalysatorschicht (9) eine Katalysatortinte bereitgestellt wird, wobei bevorzugt die Katalysatortinte ein Katalysatormaterial, welches auf einem Trägermaterial gebunden ist, ein Lösungsmittel und/oder ein Bindermaterial umfasst,
wobei bevorzugt das Katalysatormaterial ein Material umfasst ausgewählt aus einer Gruppe umfassend Platin, Ruthenium, Rhodium, Iridium, Palladium, Gold, Silber, Chrom, Mangan, Kupfer, Kobalt, Nickel, Eisen, Molybdän und/oder Yttrium,
wobei bevorzugt das Lösungsmittel ein Material umfasst ausgewählt aus einer Gruppe umfassend Wasser, ein organisches Lösungsmittel, vorzugsweise Ethanol, Propanol und/oder Butanol als auch Lösungsmittelgemische,
wobei bevorzugt das Trägermaterial Kohlenstoff, vorzugsweise in Graphitform, umfasst.

14. Membran-Elektroden-Einheit herstellbar mit einem Verfahren gemäß einem oder mehreren der vorherigen Ansprüche.

15. Verwendung einer Membran-Elektroden-Einheit gemäß dem vorherigen Anspruch für elektrochemische Anwendungen, vorzugsweise ausgewählt aus einer Gruppe umfassend Wasserstoff-Brennstoffzellen, Elektrolysezellen, Power-to-X-Anwendungen, insbesondere für eine CO₂-Elektrolyse und/oder Ammoniakelektrolyse.
